# EUROPÄISCHE PATENTSCHRIFT

(11) **EP 1 656 520 B1**
(45) Veröffentlichungstag und Bekanntmachung des Hinweises auf die Patenterteilung: **26.11.2008**
(21) Anmeldenummer: 04739285.7
(22) Anmeldetag: 21.05.2004
(51) Int. Cl.: F16N 7/38, F16N 25/02

(54) **SCHMIERGER T UND EIN SOLCHES AUFWEISENDE ABSCHMIEREINRICHTUN G**
LUBRICATING DEVICE AND LUBRICATING APPARATUS CONTAINING SAID DEVICE
APPAREIL DE LUBRIFICATION ET DISPOSITIF DE LUBRIFICATION PRESENTANT UN TEL APPAREIL

(30) Priorität: 20.08.2003 DE 20312833 U
(43) Veröffentlichungstag der Anmeldung: 17.05.2006
(73) Patentinhaber: Lincoln GmbH, 69190 Walldorf (DE)
(72) Erfinder: PALUNCIC, Zdravko, 67067 Ludwigshafen (DE); RODEMER, Karl, 69126 Heidelberg (DE)
(74) Vertreter: KEIL & SCHAAFHAUSEN Patentanwälte
(86) Internationale Anmeldenummer: PCT/EP2004/005463
(87) Internationale Veröffentlichungsnummer: WO 2005/028944

(56) Entgegenhaltungen:
- CH-A- 339 012
- US-A- 3 221 948
- US-A- 4 494 913
- US-A- 5 638 920

## Beschreibung

Die Erfindung bezieht sich auf ein Schmiergerät, insbesondere für den Einsatz in einer Einrichtung zum Abschmieren wandernder Schmierstellen, z.B. an einem Rollen-oder Kettenband, bei welchem ein Schmierstoffaustrittskörper eines Schmierkopfes, welcher sich während des Einfüllens von Schmierstoff von einer Förderpumpe in einen von dem Schmierstoffaustrittskanal abgeschnittenen Dosierraum in einer vorderen Wartestellung befindet und gegen die Wirkung einer Rückstellkraft rückwärts über eine Sperr- und Schmierstofffreigabestellungstellung, in welcher einerseits die Verbindung zwischen Förderpumpe und Dosierraum von einem Umsteuerkolben gesperrt ist und andererseits der Dosierraum in Strömungsverbindung mit dem Schmierstoffaustrittskanal steht, verschiebbar und ein vorgegebenes Schmierstoffvolumen aus dem Dosierraum in den Schmierstoffaustrittskanal förderbar ist.

Bei einem bekannten Schmierstoffgerät wie z.b. im vs 4, 494, 913 zu sehen ist, mündet die Schmierstoffzuleitung von der Förderpumpe in einen Dosierraum, welcher zwischen einem Umsteuerkolben und dem rückwärtigen Ende eines Schmierstoffaustrittskörpers vorgesehen ist, welche beide koaxial zueinander in einem Grundkörper axial verschiebbar sind. Dabei stützt sich der Schmierstoffaustrittskörper über eine Rückstellfeder an dem Grundkörper ab, welche den Schmierstoffaustrittskörper in Richtung einer vorgeschobenen Wartestellung drückt. Wird der Schmierstoffaustrittskörper gegen die Wirkung dieser Rückstellfeder nach rückwärts verschoben, so wird die Schmierstoffzuleitung von der Förderpumpe zu dem Dosierraum durch das hintere Ende des Schmierstoffaustrittskörpers gesperrt. Bei einem weiteren Zurückdrücken des Schmierstoffaustrittskörpers verschiebt der Schmierstoffaustrittskörper den Umsteuerkolben so weit, dass ein Schmterstoffaustrittskanal von dem Dosierraum innerhalb des Grundkörpers zu der Schmierstoffaustrittssteile an der Spitze des Schmierstoffaustrittskanals über einen Ringraum im mittleren Bereich des Schmierstoffaustrittskörpers freigegeben wird. Dieses bekannte Schmiergerät ist zwar zuverlässig in seiner Funktion aber verhältnismäßig teuer in seiner Herstellung. Außerdem ist die Dosierung der abzugebenden Schmierstoffmenge schwierig.

Aufgabe der vorliegenden Erfindung ist es, ein Schmierstoffgerät der eingangs genannten Art vorzuschlagen, welches bei einfacherem Aufbau eine noch zuverlässigere Abgabe einer dosierten Schmierstoffmenge gewährleistet.

Diese Aufgabe wird bei einem Schmiergerät der eingangs genannten Art erfindungsgemäß bspw. dadurch gelöst, dass der Schmierstoffaustrittskörper mit einem Umsteuerkolben derart zusammenwirkt, dass die Förderpumpe mit dem Dosierraum eine Dosierkolben/Zylinder-Anordnung über einen Ringraum des Umsteuerkolbens in Strömungsverbindung steht, wenn sich der Schmierstoffaustrittskörper in einer vorderen Wartestellung befindet, und dass der Dosierraum mit dem Schmierstoffaustrittskanal über den Ringraum in Strömungsverbindung steht, wenn sich der Schmierstoffaustrittskörper in einer zurück geschobenen Schmierstofffreigabestellung befindet, in welcher der Umsteuerkolben die Strömungsverbindung zwischen Förderpumpe und Dosierraum sperrt, und dass die zur Abgabe vorgesehene Schmierstoffmenge mittels eines von der Förderpumpe beaufschlagten Dosierkolbens aus dem Dosierraum in Richtung des Ringraumes förderbar ist.

Neben dem einfachen Aufbau des Schmiergerätes wird auf diese Weise der besondere Vorteil erzielt, dass eine jeweilige genau dosierte Schmierstoffmenge unter der Einwirkung des Druckes der Förderpumpe aus dem Schmierstoffaustrittskörper abgegeben wird.

Dabei können Schmierstoffaustrittskörper und Umsteuerkolben innerhalb eines Grundkörpers des Schmiergerätes axial zueinander ausgerichtet und gemeinsam miteinander in Axialrichtung verschiebbar sein.

Zur optischen Überwachung des Schmiergerätes kann der Dosierkolben mit einem Anzeigestift ausgestattet sein, welcher in der Dosierkolben/zylirider-Anordnung sichtbar ist oder aus dieser herausragt.

Vorzugsweise ist der Verschiebeweg des Dosierkolbens der Dosierkolben/zylinder-Anordnung und damit das Dosiervolumen mittels einer Justiereinrichtung einstellbar, wobei der Hub des Dosierkolbens z.B. über den Anzeigestift regulierbar ist.

Der Umsteuerkolben kann auf seiner dem Schmierstoffaustrittskörper abgewandten Seite auf eine Rückstellfeder abgestützt sein, welche den Umsteuerkolben bei Beendigung des Schmiervorganges aus seiner Freigabestellung, in welcher die Dosierkammer mit dem Schmierstoffaustrittskanal über den als Umfangsnut ausgebildeten Ringraum des Umsteuerkolbens in Strömungsverbindung steht, in seine vordere Sperrstellung schiebt, in welcher der Ringraum die Verbindung zwischen Förderpumpe und Dosierraum freigibt.

Einen besonders einfachen Geräteaufbau erhält man dann, wenn der Umsteuerkolben als von dem Schmierstoffaustrittskörper gesondertes Bauteil ausgebildet ist und sich der Schmierstoffaustrittskörper mit seinem rückwärtigen Ende an dem Umsteuerkolben abstützt.

Die Funktionsfähigkeit des Schmiergerätes wird dann noch weiter verbessert, wenn sich der Schmierstoffaustrittskörper auf eine Rückstellfeder abstützt, welche dem Schmierstoffaustrittskörper in Richtung seiner vorderen Ausgangsstellung drückt und gegen welche der Schmierstoffaustrittskörper in Richtung seiner rückwärtigen Schmierstofffreigabestellung zu verschieben ist.

Der Schmierkopf ist für das Ausführen eines Schmiervorganges vorzugsweise pneumatisch oder hydraulisch an eine Schmierstelle dichtend anpressbar, insbesondere wenn der Verschiebeweg des Schmiergeräte-Grundkörpers relativ zu der Bewegungsebene der Schmierstelle größer ist als der Verschiebeweg des Schmierstoffaustrittskörpers relativ zu dem Schmiergeräte-Grundkörper.

Der Schmierkopf kann ferner mit einer Druckfeder für das Zurückstellen in seine Ausgangsposition nach einem Abschmiervorgang ausgestattet sein.

Die Erfindung bezieht sich ferner auf eine Einrichtung zum Abschmieren wandernder Schmierstellen, z.B. an einem Rollen- oder Kettenband, insbesondere mit einem Schmiergerät der zuvor geschilderten Art, mit einem Mitnehmerkopf tragenden Mitnehmerarm für die Mitnahme des Schmierkopfes mit der zu schmierenden wandernden Schmierstelle.

Eine solche Abschmiereinrichtung soll einfach im Aufbau und zuverlässig in der Funktion sein. Insbesondere soll der Schmierkopf selbsttätig bei der zeitweiligen Mitnahme des Abschmiergerätes mit der oder den zu versorgenden Schmierstellen an diese heranführbar und anpressbar sein.

Diese Aufgabe wird bei einer Abschmiereinrichtung der zuvor genannten Art bspw. dadurch gelöst, dass Schmierkopf und Mitnehmerkopf mittels Federkraft und/oder pneumatisch und/oder hydraulisch aus einer zurückgezogenen Ausgangsruhelage im Wesentlichen in Richtung des Rollen- oder Kettenbandes in eine vorgeschobene Mitnahmewartelage verschiebbar sind und dass Schmierkopf und Mitnehmerkopf, vorzugsweise gemeinsam, mittels Parallellenkern an einer Befestigungsplatte zum Verschwenken von Schmierkopf und Mitnehmerarm aus der vorgeschobenen Mitnahmewartelage in eine Mitnahmearbeitslage schwenkbar gelagert sind, in welche letzterer der Mitnehmerkopf in das Rollen-oder Kettenband eingreift und der Schmierkopf dichtend an die Schmierstelle angedrückt ist.

Auf diese Weise wird, wen zur Versorgung einer bestimmten Schmierstelle oder einer bestimmten Gruppe von Schmierstellen der Mitnehmerkopf vorgeschoben und bspw. mit dem Rollen- oder Kettenband mitgenommen wird, der Schmierkopf oder eine Gruppe von Schmierköpfen zwangsläufig an die Schmierstellen herangeführt und dort zur Abgabe einer vorbestimmten Schmierstoffmenge an die Schmierstelle(n) dichtend angedrückt.

Die Verschiebung von Schmierkopf und Mitnehmerkopf erfolgt vorzugsweise mittels einer gemeinsamen Kolben/Zylinder-Anordnung.

Schmierkopf und Mitnehmerkopf können daher auch von zwei gesonderten Kolben/Zylinder-Anordnungen verschoben werden, was sogar notwendig ist, wenn der Mitnehmerkopf nicht von der Seite in das Rollen- oder Kettenband eingreifen kann.

Für den letztgenannten Fall werden Schmierkopf und Mitnehmerkopf in orthogonalen Richtungen zueinander verschoben, also der Schmierkopf von der Seite und der Mitnehmerkopf von oben oder von unten, bezogen auf das Rollen-oder Kettenband.

Der Verschiebeweg des Mitnehmerkopfes in Richtung der Ebene der Schmierstellenbewegung ist vorzugsweise größer als der des Schmierkopfes, wenn Mitnehmerkopf und Schmierkopf parallel zueinander von der Seite in Richtung des Rollen- oder Kettenbandes verschoben werden.

Die Schwenkbewegung, welche Schmierkopf und Mitnehmerkopf aufgrund der Parallellenker-Ardnung bei Einleitung des Schmiervorganges ausführen, d.h. aus der Mitnahmewartelage in die endgültige Mitnahmearbeitslage, kann gegen die Wirkung einer Rückstellkraft, z.B. einer Zugfeder, stattfinden, so dass nach Beendigung des Schmiervorganges und Zurückziehen des Mitnehmerarmes aus seiner Eingriffslage Schmierkopf und Mitnehmerkopf mittels der Parallellenker-Anordnung wieder in ihre Mitnahmewärtelage zurückgeführt werden.

Bei einer besonders vorteilhaften Ausgestaltung der Erfindung weist ein Mitnehmerarmträger, an welchem eine Kolben/Zylinder-Anordnung angreift, eine Führungsstange auf, auf welcher eine Druckfeder zur selbsttätigen Rückführung des Mitnehmerkopfes aus einer vorgeschobenen Mitnahmewartelage in seine zurückgezogene Ausgangsruhelage ungeordnet ist, wenn eine Druckumsteuerung der Kolben/Zylinder-Anordnung, mit Hilfe welcher der Mitnehmerkopf in seine vorgeschobene Mitnahmewartelage gebracht worden ist, bei Beendigung des Schmiervorganges erfolgt.

Es ist ferner von Vorteil, wenn der Mitnehmerkopf wenigstens eine sich auf einer Druckfeder abstützende Mitnehmerrolle aufweist, um die Oberflächenabnutzung möglichst niedrig zu halten.

Um Beschädigungen des Schmiergerätes zu vermeiden, kann die Anordnung aus Schmierkopf und Mitnehmerkopf relativ zu der Befestigungsplatte, z.B. mittels Schnappriegel, arretierbar sein.

In weiterer Ausgestaltung der erfundenen Abschmiereinrichtung können/kann das Verschieben und/oder Verschwenken von Schmierkopf und Mitnehmerkopf zur Einleitung eines Schmiervorganges an einer wandernden Schmierstelle von Hand und/oder selbsttätig z.B. mittelbar oder unmittelbar von der wandernden Schmierstelle selbst, z.B. durch Sensoren und/oder Näherungsschalter auslösbar sein.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1A und 1B: schematisch das grundlegende Aufbau- und Funktionsprinzip eines die Erfindung aufweisenden Schmiergerätes beim Füllen des Dosierraumes (Fig. 1A) und bei Abgabe einer vorbestimmten Schmierstoffmenge aus dem Schmierkopf (Fig. 1B),
- Fig. 2: ein Ausführungsbeispiel eines erfindungsgemäßen Schmiergerätes gemäß Fig. 1 im Längsschnitt,
- Fig. 3: in Schrägansicht eine die Erfindung aufweisende Abschmiereinrichtung, welche ein Schmiergerät nach den Fig. 1 und 2 aufweisen kann,
- Fig. 4 und 5: die Abschmiereinrichtung nach Fig. 3 in Draufsicht, und zwar in zurück geschwenkter Ausgangsruhelage (Fig. 4) und vor geschwenkter Mitnahmearbeitslage (Fig. 5).

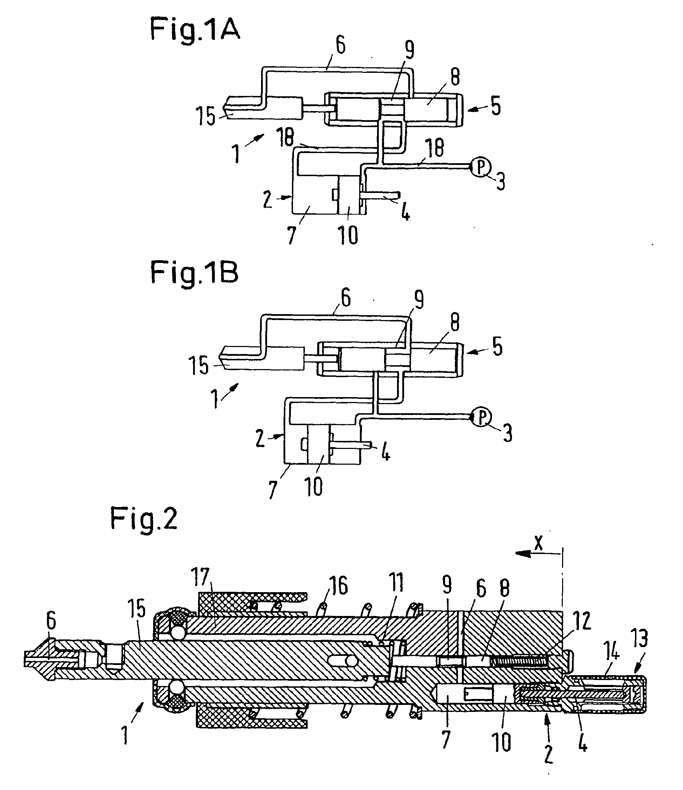

Das Schmiergerät gemäß den Fig. 1A, 1B und 2 weist einen Schmierkopf 1 mit einem Schmierstoffaustrittskörper 15 auf, in welchem ein Schmierstoffaustrittskanal 6 bis an dessen Schmierstoffaustrittsöffnung an der vorderen Spitze reicht. Der Schmierstoffaustrittskörper 15 ist axial verschieblich in einem Grundkörper 17 des Schmierkopfes 1 gelagert und stützt sich an seinem rückwärtigen Ende auf einer Rückstellfeder 11 ab. Mit seiner rückwärtigen Stirnfläche liegt der Schmierstoffaustrittskörper 15 an dem vorderen Ende eines Umsteuerkolbens 8 an, welcher mit dem Schmierstoffaustrittskörper 15 koaxial in dem Grundkörper 17 axial verschieblich ist und sich an seinem rückwärtigen Ende seinerseits auf einer Rückstellfeder 12 abstützt. Der Umsteuerkolben 8 bildet aufgrund einer in seinem mittleren Bereich vorgesehenen Umfangsnut mit dem Grundkörper 17 einen Ringraum 9, welcher in der in Fig. 2 dargestellten Betriebslage einerseits mit einem Dosierraum 7 einer in den Grundkörper 17 eingeschraubten Dosierkolben/zylinder-Anordnung 2 und andererseits mit dem Schmierstoffaustrittskanal 6 in Strömungsverbindung steht.

Der ebenfalls in dem Grundkörper 17 ausgebildete Dosierraum 7 wird von einem Dosierkolben 10 der Dosierkolben/zylinder-Anordnung 2 begrenzt. Wie aus den Fig. 1A und 1B ersichtlich ist sowohl die Rückseite als auch die dem Dosierraum 7 zugewandte Vorderseite des Dosierkolbens 10 unmittelbar bzw. mittelbar mit einer Förderpumpe 3 für Schmierstoff verbindbar. Auf seiner Rückseite trägt der Dosierkolben 10 einen Anzeigestift 4, welcher durch eine durchrichtige Kappe 14 eine optische Kontrolle der Stellung des Dosierkolbens 10 und damit der Funktionsfähigkeit des Schmiergerätes zulässt. Mittels einher Justiereinrichtung 13 für den Anzeigestift 4 lässt sich der Verstellweg und damit die abzugebende Dosiermenge einstellen, ohne dass es einer Demontage der übrigen Teile des Schmierkopfes 1 bedarf.

Abgesehen von der Rückstellfeder 11 ist der Schmierkopf 1 insgesamt pneumatisch oder hydraulisch in Richtung X gegen die Wirkung einer Druckfeder 16 an die abzuschmierende Schmierstelle, z.B. an einem (nicht dargestellten) Rollen-oder Kettenband, dichtend anpressbar, wobei der Anpressdruck regulierbar ist.

In Fig. 1A finden sich sowohl der Schmierstoffaustrittskörper 15 als auch der Umsteuerkolben 8 der Umsteuerkolben/zylinder-Anordnung 5 in ihrer vorderen Wartestellung. In dieser Stellung ist die Förderpumpe 3 über eine Versorgungsleitung 18 und den Ringraum 9 mit dem Dosierraum 7 verbunden, so dass der Dosierraum 7 unter Zurückschieben des Dosierkolbens 10 mit dem vorgesehenen Dosiermenge an Schmierstoff gefüllt werden kann, weil die dem Dosierraum 7 zugewandte wirksame Fläche des Dosierkolbens 10 größer ist als die abgewandte.

Werden Schmierstoffaustrittskörper 15 und damit Umsteuerkolben 8 bei Beginn des Abschmiervorganges durch dichtes Anpressen an die Schmierstelle, z.B. des Rollen- oder Kettenbandes, in die in Fig. 1B dargestellte zurückgeschobene Lage überführt, wird die Schmierstoffzuführung von der Förderpumpe 3 zu dem Dosierraum 7 mittels des linken Teils des Umsteuerkolbens 8 abgesperrt und der rechte Teil des Umsteuerkolbens 8 gibt den Ringraum 9 zu dem schmierstoffaustrittskanal 6 frei. Auf diese Weise wird der Dosierkolben 10 mit Hilfe des Förderdruckes der Förderpumpe 3 (in der Zeichnung von rechts nach links) verschoben, um das in dem Dosierraum 7 die Dosierkolben/zylinder-Anordnung 2 vorhandene Schmierstoffmenge in die Verbindungsleitung zu dem Ringraum 9 und damit den Schmierstoffaustrittskanal 6 abgegeben.

Werden bei Beendigung des Schmiervorganges aufgrund des Abhebens des Schmierkopfes 1 von der Schmierstelle der Schmierstoffaustrittskörper 15 und der Umsteuerkolben 8 aufgrund der Rückstellfedern 11 bzw. 12 wieder in ihre in Fig. 1A dargestellte Ausgangslage zurückgeführt, so wirkt der Förderdruck der Förderpumpe 3 wieder auf die dem Dosierraum 7 zugewandten Stirnfläche des Dosierkolbens 10 ein, welche größer ist als die rückwärtige Stirnfläche, so dass sich der Dosierkolben 10 unter Füllen des Dosierraumes 7 (in der Zeichnung von links nach rechts) zurück schiebt. Die hinter dem Dosierkolben 10 befindliche Schmierstoffmenge wird ebenfalls über den Ringraum 9 in Richtung des Dosierraums 7 gefördert.

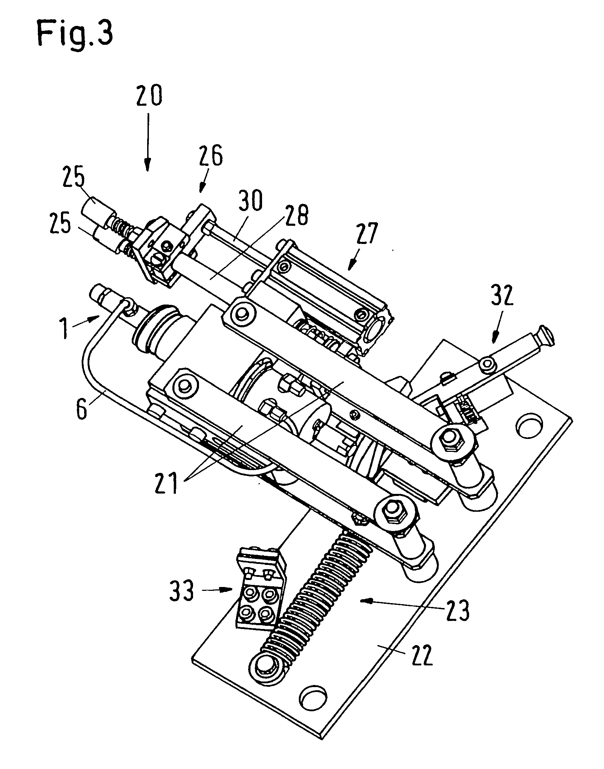

Die in den Fig. 3 bis 5 dargestellte Abschmiereinrichtung kann mit einem Schmiergerät gemäß den Fig. 1 und 2 ausgerüstet sein, sie eignet sich aber auch für Schmiergeräte herkömmlicher (eingangs geschilderter) Art oder anderer Art, wenn sie mit einem Schmierkopf and wenigstens einem Mitnehmerkopf arbeiten.

Bei dem dargestellten Ausführungsbeispiel der Schmiereinrichtung sind Schmierkopf 1 und ein einen Mitnehmerkopf 25 tragenden Mitnehmerarm 20 gemeinsam mittels wenigstens einer Anordnung von Parallellenkern 21 an einer Befestigungsplatte 22 schwenkbar gelagert. In dem dargestellten Fall ist der Mitnehmerkopf 25 für den Eingriff in ein (nicht dargestelltes) Rollen- oder Kettenband vorgesehen, damit das Schiergerät zeitweilig, d.h. für die Dauer des Abschmiervorganges, in der Geschwindigkeit des die zu versorgenden Schmierstellen aufweisenden Rollen- oder Kettenbandes mitgeführt werden kann. Einzelheiten, wie dies bspw. geschehen kann, sind in der DE 201 14 728 U näher geschildert, worauf hier zum Zwecke der Offenbarung ausdrücklich Bezug genommen wird.

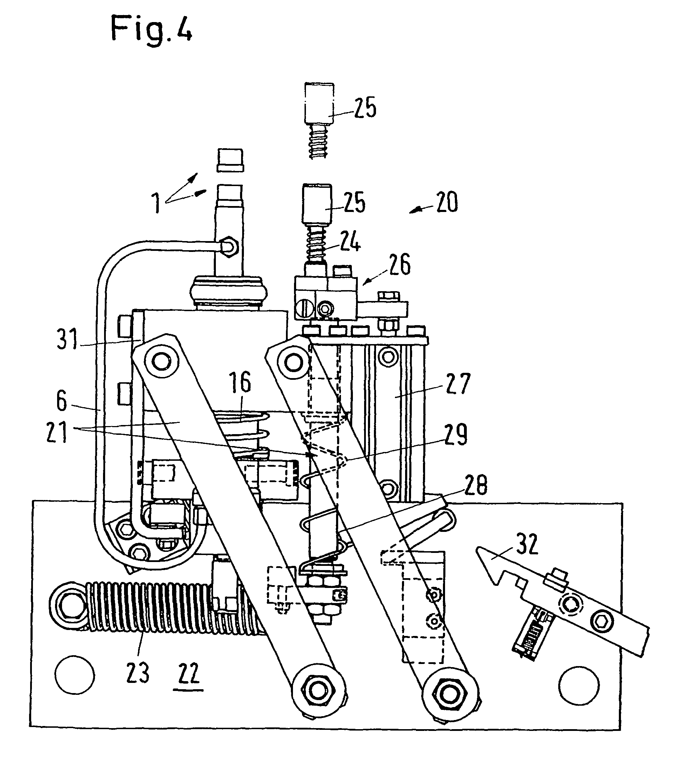

Der Mitnehmerkopf 25 ist mittel Mitnehmerarm 20 am vorderen Ende einer Führungsstange 28 eines Mitnehmerarmträgers 26 aufgenommen und weist z.B. zwei Mitnehmerrollen oder -stifte auf, welche sich jeweils rückwärtig auf einer Druckfeder 24 abstützen. An dem Mitnehmerarmträger 26 greift eine Kolben/Zylinder-Anordnung 27 über eine Kolbenstange 30 an. Auf diese Weise kann, wie Fig. 4 zeigt, der Mitnehmerkopf 25 - ebenso wie der Schmierkopf 1 - von der Seite des Rollen- oder Kettenbandes her aus einer zurückgezogenen Ausgangsruhelage in eine vorgeschobene Mitnahmewartelage überführt werden. In dieser kann der Mitnehmerkopf 25 bspw. in ein die wandernden und zu versorgenden Schmierstellen aufweisenden Rollen- oder Kettenband von der Seite her eingreifen. Das Vorschieben des Mitnehmerkopfes 25 geschieht gegen die Wirkung einer als Druckfeder ausgebildeten Rückstellfeder 29, welche den Mitnehmerarm 20 nach Beendigung des Abschmiervorganges und Druckumsteuerung der Kolben/Zylinder-Anordnung 27 in die in Fig. 4 dargestellte Mitnahmewartelage zurück überführt.

Der Schmierkopf 1 ist neben der Mitnehmerarmanordnung über einen Schmierkopfhalter 31 und über die Anordnung von Parallellenkern 21 mit der Befestigungsplatte 22 schwenkbar verbunden und über den als Schlauch ausgebildeten Schmierstoffaustrittskanal 6 an die (nicht dargestellte) Schmierstoffversorgung angeschlossen.

Zu Beginn eines Schmiervorganges wird die Betätigung der Kolben/ZylinderAnordnung 27, z.B. von der betreffenden Schmierstelle selbst durch Näherungsschalter oder von Hand, ausgelöst. Dadurch werden Schmierkopf 1 und Mitnehmerarm 20, wie aus Fig. 4 ersichtlich, aus der zurück gezogenen Ausgangsruhelage in die vorgeschobene Mitnahmewartelage verschoben. Der Verschiebeweg des Mitnehmerkopfes 25 ist dabei größer als der des Schmierkopfes 1, um schon in das Rollen- oder Kettenband eingreifen zu können, bevor der Schmierkopf 1 durch Verschwenken mitgenommen an die Schmierstelle geschwenkt und dort dichtend angedrückt wird.

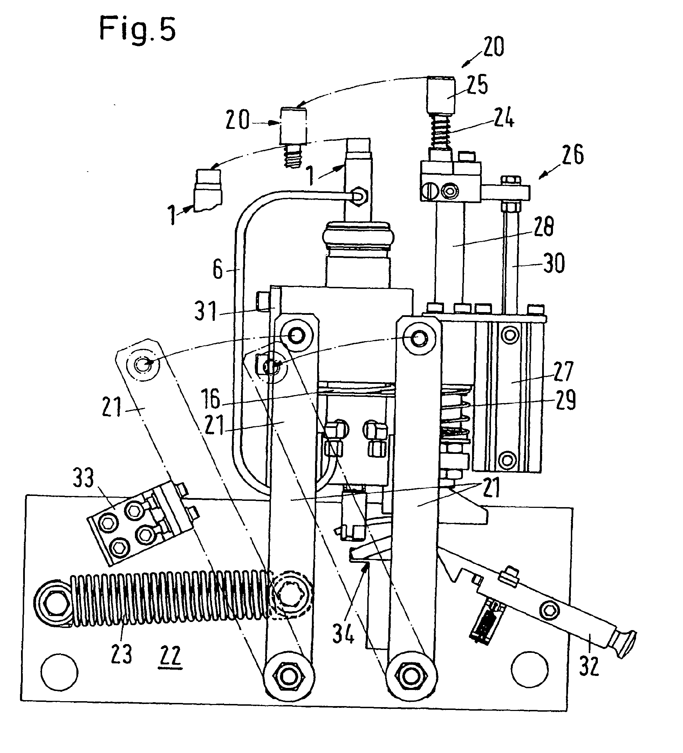

Greift nun aufgrund des in Fig. 4 veranschaulichten Vorschiebens der Mitnehmerkopf 25 in das genannte Rollen- oder Kettenband ein, wird die Anordnung aus Mitnehmerkopf 25 und Schmierkopf 1 aus der in Fig. 4 dargestellten Mitnahmewartelage in die in Fig. 5 in ausgezogenen Linien der Anordnung von Parallellenkern 21 dargestellte Mitnahmearbeitslage überführt, und zwar gegen die Wirkung einer als Zugfeder ausgebildeten Rückstellfeder 23. Die Bewegungswege, welche der Mitnehmerarm 20 und der Schmierkopf dabei äusführen, sind in Fig. 5 angedeutet. Wenn die Parallellenker-Anordnung 21 die in Fig. 5 in ausgezogenen Linien dargestellte senkrechte Mitnahmearbeitslage erreicht hat und dabei von dem Schmierkopf 1 die dosierte Schmierstoffmenge an die Schmierstelle abgegeben worden ist, wird durch ein z.B. mechanisches Umsteuerventil 34 die Kolben/Zylinder-Anordnung 27 umgesteuert und werden damit der Mitnehmerkopf 25 und der Schmierkopf 1 außer Eingriff mit dem Rollen- oder Kettenband zurückgezogen, so dass die Anordnung aus Schmierkopf 1 und Mitnehmerkopf 25 von der Zugfeder 23 wieder in ihre Ausgangsruhelage, und zwar bis zu einem Anschlag 33 an der Befestigungsplatte 22 für die Paarallellenker 21, zurück geschwenkt wird.

Die Anordnung kann ferner mittels eines Schnappriegels 32, z.B. bei einem unzulässigen Überfahren einer Schmierstelle, arretiert werden, um eine Beschädigung der Einrichtung zu vermeiden.

Die Abschmiereinrichtung kann von Hand oder selbsttätig arbeiten, wobei der Abschmiervorgang von den betreffenden Schmierstellen selbst ausgelöst werden kann. Hierbei sind z.B. die Schmierzyklen einstellbar und ist z.B. bei zu hoher Geschwindigkeit des Rollen- oder Kettenbandes durch Zählen der Schmierstellen festlegbar, dass nur jede zweite Schmierstelle bei einem Umlauf abgeschmiert wird.

Bei der zuvor geschilderten Ausführungsart der Abschmiereinrichtung hat die Kolben/Zylinder-Anordnung 27 zwei Funktionen, den z.B. gabelförmigen Mitnehmerarm 20 vorzuschieben in eine Mitnahmewartelage und den Schmierkopf 1 anzudrücken an die z.B. von einem Schmiernippel gebildete Schmierstelle.

Bei abzuschmierenden Rollen- oder Kettenbändern kann es jedoch vorkommen, dass der Mitnehmerkopf 25 wegen vorgebauter breiter Laschen nicht von der Seite her in das Rollen- oder Kettenband greifen kann. Insbesondere für diesen Fall behält die Kolben/Zylinder-Anordnung 27 nur die zuvor genannte zweite Funktion. Der Mitnehmerarm 20 ist in diesem Fall an seinem vorderen Ende mit einer zweiten Kolben/Zylinder-Anordnung ausgestattet, welche den z.B. als Rolle oder Stift ausgebildeten Mitnehmerkopf 25 von oben oder unten mit dem Rollen- oder Kettenband in Eingriff bringt.

### Bezugszeichenliste

- 1: Schmierkopf
- 2: Dosierkolben/zylinder-Anordnung
- 3: Förderpumpe
- 4: Anzeigestift
- 5: Umsteuerkolben/zylinder-Anordnung
- 6: Schmierstoffaustrittskanal
- 7: Dosierraum
- 8: Umsteuerkolben
- 9: Ringraum (Umfangsnut)
- 10: Dosierkolben
- 11: Rückstellfeder (Druckfeder)
- 12: Rückstellfeder (Druckfeder)
- 13: Justiereinrichtung
- 14: Kappe
- 15: Schmierstoffaustrittskörper
- 16: Druckfeder
- 17: Grundkörper
- 18: Versorgungsleitung
- 20: Mitnehmerarm
- 21: Parallellenker
- 22: Befestigungsplatte
- 23: Zugfeder (Rückstellfeder)
- 24: Druckfeder
- 25: Mitnehmerkopf (Mitnehmerrolle, Mitnehmerstift)
- 26: Mitnehmerarmträger
- 27: Kolben/Zylinder-Anordnung
- 28: Führungsstange
- 29: Druckfeder (Rückstellfeder)
- 30: Kolbenstange
- 31: Schmierkopfhalter
- 32: Schnappriegel
- 33: Anschlag
- 34: Umsteuerventil

- X: Anpressrichtung

## Patentansprüche

1. Schmiergerät, insbesondere für den Einsatz in einer Einrichtung zum Abschmieren wandernder Schmierstellen, z.B. an einem Rollen- oder Kettenband und z.B. in einer solchen nach einem der Ansprüche 10 bis 16, bei welchem ein Schmierstoffaustrittskörper (15) eines Schmierkopfes (1), welcher sich während des Einfüllens von Schmierstoff von einer Förderpumpe (3) in einen von dem Schmierstoffaustrittskanal (6) abgeschnittenen Dosierraum (7) in einer vorderen Wartestellung befindet und gegen die Wirkung einer Rückstellkraft (11) rückwärts in eine Sperr- und Schmierstofffreigabestellung, in welcher einerseits die Verbindung zwischen Förderpumpe (3) und Dosierraum (7) von einem Umsteuerkolben (8) gesperrt ist und andererseits der Dosierraum (7) in Strömungsverbindung mit dem Schmierstoffaustrittskanal (6) steht, verschiebbar und ein vorgegebenes Schmierstoffvolumen aus dem Dosierraum (7) in den Schmierstoffaustrittskanal (6) förderbar ist, **dadurch gekennzeichnet, dass** der Schmierstoffaustrittskörper (15) mit einem Umsteuerkolben (8) derart zusammenwirkt, dass die Förderpumpe (3) mit dem Dosierraum (7) einer Dosierkolben/Zylinder-Anordnung (2) über einen Ringraum (9) des Umsteuerkolbens (8) in Strömungsverbindung steht, wenn sich der Schmierstoffaustrittskörper (15) in einer vorderen Wartestellung befindet, und dass der Dosierraum (7) mit dem Schmierstoffaustrittskanal (6) über den Ringraum (9) in Strömungsverbindung steht, wenn sich der Schmierstoffaustrittskörper (15) in einer zurück geschobenen Schmierstofffreigabestellung befindet, in welcher der Umsteuerkolben (8) die Strömungsverbindung zwischen Förderpumpe (3) und Dosierraum (7) sperrt, und dass die zur Abgabe vorgesehene Schmierstoffmenge mittels eines von der Förderpumpe (3) beaufschlagten Dosierkolbens (10) aus dem Dosierraum (7) in Richtung des Ringraumes (9) beförderbar ist.

2. Schmiergerät nach Anspruch 1, **dadurch gekennzeichnet, dass** Schmierstoffaustrittskörper (15) und Umsteuerkolben (8) axial zueinander ausgerichtet und gemeinsam miteinander in Axialrichtung verschiebbar sind.

3. Schmiergerät nach Anspruch 1 oder 2, **dadurch gekennzeichnet, dass** der Dosierkolben (10) mit einem Anzeigestift (4) ausgestattet ist, welcher in der Dosierkolben/zylinder-Anordnung (2) sichtbar ist oder aus dieser herausragt.

4. Schmiergerät nach einem der Ansprüche 1 bis 3, **dadurch gekennzeichnet, dass** der Verschiebeweg des Dosierkolbens (10) mittels einer Justiereinrichtung (13) des Dosierkolbens (10) über den Anzeigestift (4) regulierbar ist.

5. Schmiergerät nach einem der vorhergehenden Ansprüche, **dadurch gekennzeichnet, dass** sich der Umsteuerkolben (8) auf der dem Schmierstoffaustrittskörper (15) abgewandten Seite auf einer Rückstellfeder (12) abstützt.

6. Schmiergerät nach einem der vorhergehenden Ansprüche, **dadurch gekennzeichnet, dass** der Umsteuerkolben (8) als von dem Schmierstoffaustrittskörper (15) gesondertes Bauteil ausgebildet ist und sich der Schmierstoffaustrittskörper (15) mit seinem rückwärtigen Ende an dem Umsteuerkolben (5) abstützt.

7. Schmiergerät nach einem der vorhergehenden Ansprüche, **dadurch gekennzeichnet, dass** sich der Schmierstoffaustrittskörper (15) auf einer Rückstellfeder (11) abstützt.

8. Schmiergerät nach einem der Ansprüche 1 bis 7, **dadurch gekennzeichnet, dass** der Schmierkopf (1) pneumatisch oder hydraulisch an eine Schmierstelle dichtend anpressbar ist.

9. Schmiergerät nach einem der Ansprüche 1 bis 8, **dadurch gekennzeichnet, dass** der Schierkopf (1) eine Druckfeder (16) für das Zurückstellen in seine Ausgangsposition aufweist.

10. Einrichtung zum Abschmieren wandernder Schmierstellen, z.B. an einem Rollen- oder Kettenband, mit einem Schmiergerät nach einem der Ansprüche 1 bis 9, mit einem einen Mitnehmerkopf (25) tragenden Mitnehmerarm (20) für die Mitnahme des Schmierkopfes (1) mit der zu schmierenden wandernden Schmierstelle, **dadurch gekennzeichnet, dass** Schmierkopf (1) und Mitnehmerkopf (25) mittels Federkraft und/oder pneumatisch und/oder hydraulisch aus einer zurückgezogenen Ausgangsruhelage im Wesentlichen in Richtung des Rollten- oder Kettenbandes in eine vorgeschobene Mitnahmewartelage verschiebbar sind und dass Schmierkopf (1) und Mitnehmerarm (20), vorzugsweise gemeinsam, mittels Parallellenkern (23) an einer Befestigungsplatte (22) zum Verschwenken von Schmierkopf (1) und Mitnehmerkopf (25) aus der vorgeschobenen Mitnahmewartelage in eine Mitnahmearbeitslage schwenkbar gelagert sind, in welch letzterer der Mitnehmerkopf (25) in das Rollen- oder Kettenband eingreift und der Schmierkopf (1) dichtend an die Schmierstelle abgedrückt ist.

11. Einrichtung nach Anspruch 10, **dadurch gekennzeichnet, dass** die Verschiebung von Schmierkopf (1) und Mitnehmerkopf (25) mittels einer gemeinsamen Kolben/Zylinder-Anordnung (27) erfolgt.

12. Einrichtung nach Anspruch 10, **dadurch gekennzeichnet, dass** die Verschiebung von Schmierkopf (1) und Mitnehmerkopf (25) mittels zweier gesonderter Kolben/Zylinder-Anordnungen (27) erfolgt.

13. Einrichtung nach Anspruch 12, **dadurch gekennzeichnet, dass** Schmierkopf (1) und Mitnehmerkopf (25) in zueinander orthogonalen Richtungen verschiebbar sind.

14. Einrichtung nach einem der Ansprüche 10 bis 13, **dadurch gekennzeichnet, dass** der Verschiebeweg des Mitnehmerkopfes (25) größer ist als der des Schmierkopfes (1), wenn Mitnehmerkopf (25) und Schmierkopf (1) parallel zueinander in Richtung des Rollen- oder Kettenbandes verschoben werden.

15. Einrichtung nach einem der Ansprüche 10 bis 14, **dadurch gekennzeichnet, dass** die Schwenkbewegung von Schmierkopf (1) und Mitnehmerkopf (25) aus der Mitnahmewartelage in die Mitnahmearbeitslage gegen die Wirkung einer Rückstellkraft, z.B. einer Zugfeder (23), erfolgt.

16. Einrichtung nach einem der Ansprüche 10 bis 15, **dadurch gekennzeichnet, dass** ein Mitnehmerkopfträger (26), an welchem die Kolben/ZylinderAnordnung (27) angreift, eine Führungsstange (28) aufweist, auf welcher eine Druckfeder (29) zur Rückstellung des wenigstens einen Mitnehmerkopfes (25) aus seiner vorgeschobenen Mitnahmelage in seine zurückgezogene Ausgangsruhelage bei Druckumsteuerung der Kolben/Zylinder-Anordnung (27) angeordnet ist.

17. Einrichtung nach einem der Ansprüche 10 bis 16, **dadurch gekennzeichnet, dass** der Mitnehmerkopf (25) wenigstens eine(n) sich auf eine Druckfeder (24) abstützende(n) Mitnehmerrolle oder Mitnehmerstift aufweist.

18. Einrichtung nach einem der Ansprüche 10 bis 17, **dadurch gekennzeichnet, dass** die Anordnung aus Schmierkopf (1) und Mitnehmerkopf (25) relativ zu der Befestigungsplatte (22) arretierbar ist.

19. Einrichtung nach einem der Ansprüche 10 bis 18, **dadurch gekennzeichnet, dass** das Verschieben und/oder Verschwenken von Schmierkopf (1) und Mitnehmerkopf (20) zur Einleitung eines Schmiervorganges an einer wandernden Schmierstelle von Hand und/oder selbsttätig z.B. mittelbar oder unmittelbar von der wandernden Schmierstelle selbst, z.B. durch Sensoren und/oder Näherungsschalter, auslösbar ist.

## Claims

1. Lubricating device, in particular for use in an apparatus for lubricating migrating lubrication sites, for example on a roller or chain belt and, for example in one such as claimed in one of claims 10 to 16, in which a lubricant discharge body (15) of a lubricating head (1), which during the filling of lubricant from a feed pump (3) into a dosing chamber (7) cut off from the lubricant discharge channel (6) is located in a forward standby position and, against the action of a reset force (11) is rearwardly displaceable into a blocked and lubricant release position, in which, on the one hand, the connection between feed pump (3) and dosing chamber (7) is blocked by a reversing piston (8) and, on the other hand the dosing chamber (7) is in fluidic connection with the lubricant discharge channel (6), and a predetermined volume of lubricant can be transported from the dosing chamber (7) into the lubricant discharge channel (6), **characterized in that** the lubricant discharge body (15) cooperates with a reversing piston (8) such that the feed pump (3) is fluidally connected with the dosing chamber (7) of a dosing piston/cylinder configuration (2) via an annular space (9) of the reversing piston (8) when the lubricant discharge body (15) is located in a forward standby position, and that the dosing chamber (7) is fluidally connected with the lubricant discharge channel (6) via the annular space (9) when the lubricant discharge body (15) is located in a rearwardly displaced lubricant release position, in which the reversing piston (8) blocks the fluidic connection between feed pump (3) and dosing chamber (7), and that the lubricant quantity provided for the delivery is transportable by means of a dosing piston (10) acted upon by the feed pump (3) from the dosing chamber (7) in the direction of the annular chamber (9).

2. Lubricating device is claimed in claim 1, **characterized in that** lubricant discharge body (15) and reversing piston (8) are oriented axially with respect to one another and are jointly displaceable in the axial direction.

3. Lubricating device as claimed in claim 1 or 2, **characterized in that** the dosing piston (10) is equipped with an indicator pin (4), which is visible in the dosing piston/cylinder configuration (2) or projects from it.

4. Lubricating device as claimed in one of claims 1 to 3, **characterized in that** the displacement path of the dosing piston (10) is regulatable via the indicator pin (4) by means of an adjustment device (13) of the dosing piston (10).

5. Lubricating device as claimed in one of the preceding claims, **characterized in that** the reversing piston (8) on the side facing away from the lubricant discharge body (15) is stayed on a reset spring (12).

6. Lubricating device as claimed in one of the preceding claims, **characterized in that** the reversing piston (8) is developed as a structural part separate from the lubricant discharge body (15) and the lubricant discharge body (15) is stayed with its rearward end on the reversing piston (5).

7. Lubricating device as claimed in one of the preceding claims, **characterized in that** the lubricant discharge body (15) is stayed on a reset spring (11).

8. Lubricating device as claimed in one of claims 1 to 7, **characterized in that** the lubricating head (1) can be sealingly pressed pneumatically or hydraulically onto a lubrication site.

9. Lubricating device as claimed in one of claims 1 to 8, **characterized in that** the lubricating head (1) comprises a compression spring (16) for resetting it into its initial position.

10. Apparatus for lubricating migrating lubrication sites, for example on a roller or chain belt, with a lubricating device as claimed in one of claims 1 to 9, with a catch arm (20) supporting a catch head (25) for carrying along of the lubricating head (1) with the migrating lubrication site to be lubricated, **characterized in that** lubricating head (1) and catch head (25) are displaceable by means of spring force and/or pneumatically and/or hydraulically from a rearwardly displaced initial resting position substantially in the direction of the roller or chain belt into a forwardly advanced standby catch position, and that lubricating head (1) and catch arm (20), preferably jointly, are swivelably pivoted by means of parallel linkage bars (23) on a securement plate (22) for swivelling of lubricating head (1) and catch head (25) from the forwardly advanced catch standby position into a working catch position, in the latter position the catch head (25) engages into the roller or chain belt and the lubricating head (1) is pressed sealingly onto the lubrication site.

11. Apparatus as claimed in claim 10, **characterized in that** the displacement of lubricating head (1) and catch head (25) takes place by means of a joint piston/cylinder configuration (27).

12. Apparatus as claimed in claim 10, **characterized in that** the displacement of lubricating head (1) and catch head (25) takes place by means of two separate piston/cylinder configurations (27).

13. Apparatus as claimed in claim 12, **characterized in that** lubricating head (1) and catch head (25) are displaceable in directions orthogonal with respect to one another.

14. Apparatus as claimed in one of claims 10 to 13, **characterized in that** the displacement path of the catch head (25) is greater than that of the lubricating head (1) when the catch head (25) and the lubricating head (1) are displaced parallel to one another in the direction of the roller or chain belt.

15. Apparatus as claimed in one of claims 10 to 14, **characterized in that** the swivel motion of the lubricating head (1) and of the catch head (25) from the standby catch position into the working catch position takes place against the action of a reset force, for example of a tension spring (23).

16. Apparatus as claimed in one of claims 10 to 15, **characterized in that** a catch head support (26), on which engages the piston/cylinder configuration (27), comprises a guidance rod (28), on which a compression spring (29) is disposed for resetting the at least one catch head (25) from its forwardly advanced catch position into its rearwardly displaced initial resting position upon the pressure reversal of the piston/cylinder configuration (27).

17. Apparatus as claimed in one of claims 10 to 16, **characterized in that** the catch head (25) comprises at least one catch roller or catch pin stayed on a compression spring (24).

18. Apparatus as claimed in one of claims 10 to 17, **characterized in that** the configuration of lubricating head (1) and catch head (25) is arrestable relative to the securement pate (22).

19. Apparatus as claimed in one of claims 10 to 18, **characterized in that** the displacement and/or swivelling of the lubricating head (1) and the catch head (20) for the initiation of a lubrication process at a migrating lubrication site can be triggered manually and/or automatically, for example directly or indirectly by the migrating lubrication site itself, for example by sensors and/or proximity switches.

## Revendications

1. Appareil de lubrification destiné en particulier à être utilisé dans un dispositif de lubrification de points de lubrification mobiles, par exemple sur une bande transporteuse à rouleaux ou à chaîne et par exemple dans un dispositif selon l'une des revendications 10 à 16, dans lequel un corps de sortie de lubrifiant (15) d'une tête de graissage (1) qui se trouve, pendant le remplissage en lubrifiant par une pompe d'alimentation (3) d'un espace de dosage (7) séparé du canal de sortie de lubrifiant (6), dans une position d'attente avant, et peut être déplacé à l'encontre de l'action d'une force de rappel (11) vers l'arrière dans une position de blocage et de distribution de lubrifiant dans laquelle d'une part la communication entre la pompe d'alimentation (3) et l'espace de dosage (7) est bloquée par un piston réversible (8) et d'autre part l'espace de dosage (7) est en communication fluidique avec le canal de sortie de lubrifiant (6), et un volume prédéfini de lubrifiant peut être transporté hors de l'espace de dosage (7) dans le canal de sortie de lubrifiant (6), **caractérisé en ce que** le corps de sortie de lubrifiant (15) coopère avec un piston réversible (8) de telle manière que la pompe d'alimentation (3) est en communication fluidique avec l'espace de dosage (7) d'un agencement piston de dosage/cylindre (2) par l'intermédiaire d'un espace annulaire (9) du piston réversible (8) lorsque le corps de sortie de lubrifiant (15) se trouve dans une position d'attente avant, et **en ce que** l'espace de dosage (7) est en communication fluidique avec le canal de sortie de lubrifiant (6) par l'intermédiaire de l'espace annulaire (9) lorsque le corps de sortie de lubrifiant (15) se trouve dans une position de distribution du lubrifiant déplacée vers l'arrière dans laquelle le piston réversible (8) bloque la communication fluidique entre la pompe d'alimentation (3) et l'espace de dosage (7), et **en ce que** la quantité de lubrifiant qu'il est prévu de délivrer peut être transportée hors de l'espace de dosage (7) en direction de l'espace annulaire (9) au moyen d'un piston de dosage (10) sollicité par la pompe d'alimentation (3).

2. Appareil de lubrification selon la revendication 1, **caractérisé en ce que** le corps de sortie de lubrifiant (15) et le piston réversible (8) sont alignés axialement l'un vers l'autre et peuvent être déplacés ensemble l'un avec l'autre en direction axiale.

3. Appareil de lubrification selon la revendication 1 ou 2, **caractérisé en ce que** le piston de dosage (10) est muni d'une broche d'indication (4) qui est visible dans l'agencement piston de dosage/cylindre (2) ou qui en dépasse vers l'extérieur.

4. Appareil de lubrification selon une des revendications 1 à 3, **caractérisé en ce que** la course de déplacement du piston de dosage (10) peut être régulée au moyen d'un dispositif d'ajustement (13) du piston de dosage (10) par l'intermédiaire de la broche d'indication (4).

5. Appareil de lubrification selon une des revendications précédentes, **caractérisé en ce que** le piston réversible (8) prend appui sur un ressort de rappel (12) sur sa face opposée au corps de sortie de lubrifiant (15).

6. Appareil de lubrification selon l'une des revendications précédentes, **caractérisé en ce que** le piston réversible (8) est réalisé sous la forme d'un élément distinct du corps de sortie de lubrifiant (15), et **en ce que** le corps de sortie de lubrifiant (15) prend appui par son extrémité arrière sur le piston réversible (8).

7. Appareil de lubrification selon l'une des revendications précédentes, **caractérisé en ce que** le corps de sortie de lubrifiant (15) prend appui sur un ressort de rappel (11).

8. Appareil de lubrification selon l'une des revendications 1 à 7, **caractérisé en ce que** la tête de graissage (1) peut être appliquée par voie pneumatique ou hydraulique de manière étanche sur un point de lubrification.

9. Appareil de lubrification selon l'une des revendications 1 à 8, **caractérisé en ce que** la tête de graissage (1) présente un ressort de pression (16) assurant son retour à sa position initiale.

10. Dispositif de lubrification de points de lubrification mobiles, par exemple sur une bande transporteuse à rouleaux ou à chaîne, comportant un appareil de lubrification selon l'une des revendications 1 à 9, comportant un bras d'entraînement (20) portant une tête d'entraînement (25) assurant l'entraînement de la tête de graissage (1) avec le point de lubrification mobile à lubrifier, **caractérisé en ce que** la tête de graissage (1) et la tête d'entraînement (25) peuvent être déplacées sensiblement en direction de la bande transporteuse à rouleaux ou à chaîne au moyen de la force d'un ressort et/ou par voie pneumatique et/ou par voie hydraulique d'une position initiale de repos rétractée dans une position d'attente d'entraînement déplacée vers l'avant, et **en ce que** la tête de graissage (1) et le bras d'entraînement (20) sont montés pour pouvoir pivoter, de préférence ensemble, au moyen de bielles parallèles (**21**) prévues sur une plaque de fixation (22), pour faire pivoter la tête de graissage (1) et la tête d'entraînement (25) de la position d'attente d'entraînement déplacée vers l'avant dans une position fonctionnelle d'entraînement dans laquelle la tête d'entraînement (25) s'engage dans la bande transporteuse à rouleaux ou à chaîne, et la tête de graissage (1) est appliquée de manière étanche sur le point de lubrification.

11. Dispositif selon la revendication 10, **caractérisé en ce que** le déplacement de la tête de graissage (1) et de la tête d'entraînement (25) s'effectue au moyen d'un agencement piston/cylindre (27) commun.

12. Dispositif selon la revendication 10, **caractérisé en ce que** le déplacement de la tête de graissage (1) et de la tête d'entraînement (25) s'effectue au moyen de deux agencements piston/cylindre (27) séparés.

13. Dispositif selon la revendication 12, **caractérisé en ce que** la tête de graissage (1) et la tête d'entraînement (25) peuvent être déplacées dans des directions orthogonales l'une par rapport à l'autre.

14. Dispositif selon l'une des revendications 10 à 13, **caractérisé en ce que** la course de déplacement de la tête d'entraînement (25) est plus grande que celle de la tête de graissage (1) lorsque la tête d'entraînement (25) et la tête de graissage (1) sont déplacées parallèlement l'une à l'autre dans la direction de la bande transporteuse à rouleaux ou à chaîne.

15. Dispositif selon l'une des revendications 10 à 14, **caractérisé en ce que** le mouvement de pivotement de la tête de graissage (1) et de la tête d'entraînement (25) de la position d'attente d'entraînement à la position fonctionnelle d'entraînement s'effectue à l'encontre d'une force de rappel, par exemple d'un ressort de traction (23).

16. Dispositif selon l'une des revendications 10 à 15, **caractérisé en ce qu'**un support de tête d'entraînement (26) sur lequel s'engage l'agencement piston/cylindre (27) présente une tige de guidage (28) sur laquelle est disposé un ressort de pression (29) servant au retour de la au moins une tête d'entraînement (25) de sa position d'entraînement déplacée vers l'avant à sa position de repos initiale rétractée lors de l'inversion de la pression de l'agencement piston/cylindre (27).

17. Dispositif selon l'une des revendications 10 à 16, **caractérisé en ce que** la tête d'entraînement (25) présente au moins un galet d'entraînement ou une broche d'entraînement prenant appui sur un ressort de pression (24).

18. Dispositif selon l'une des revendications 10 à 17, **caractérisé en ce que** l'agencement constitué de la tête de graissage (1) et de la tête d'entraînement (25) peut être bloqué par rapport à la plaque de fixation (22).

19. Dispositif selon l'une des revendications 10 à 18, **caractérisé en ce que** le déplacement et/ou le pivotement de la tête de graissage (1) et de la tête d'entraînement (20) destiné à amorcer un processus de lubrification en un point de lubrification mobile peut être déclenché manuellement et/ou automatiquement, par exemple directement ou indirectement par le point de lubrification mobile lui-même, par exemple par des capteurs et/ou des détecteurs de proximité.
